# FASCICULE DE BREVET EUROPEEN

(11) **EP 1 362 014 B1**
(45) Date de publication et mention de la délivrance du brevet: **20.08.2008**
(21) Numéro de dépôt: 02700408.4
(22) Date de dépôt: 24.01.2002
(51) Int. Cl.: C03C 17/32, C03C 17/34, C08J 7/06, B05D 1/00, B05D 3/00

(54) **PROCEDE D'INCORPORATION D'UN ADDITIF DANS UNE COUCHE MINCE FORMEE SUR UN SUBSTRAT ET SON APPLICATION A L'OPTIQUE OPHTALMIQUE**
VERFAHREN ZUM BEIMENGEN VON EINES ZUSATZES IN EINE AUF EIN SUBSTRAT GEBILDETE DÜNNSCHICHT UND DESSEN VERWENDUNG IN DER OPHTHALMISCHEN OPTIK
METHOD FOR INCORPORATING AN ADDITIVE IN A THIN LAYER FORMED ON A SUBSTRATE AND ITS USE IN OPHTHALMIC OPTICS

(30) Priorité: 25.01.2001 FR 0101028
(43) Date de publication de la demande: 19.11.2003
(73) Titulaire: ESSILOR INTERNATIONAL COMPAGNIE GENERALE D'OPTIQUE, 94227 Charenton cédex (FR)
(72) Inventeur: LECLAIRE, Yves, F-77380 Combs La Ville (FR); CANO, Jean-Paul, F-94430 Chennevières sur Marne (FR)
(74) Mandataire: Catherine, Alain
(86) Numéro de dépôt international: PCT/FR2002/000301
(87) Numéro de publication internationale: WO 2002/059054

(56) Documents cités:
- US-A- 4 146 658
- US-A- 5 316 791

## Description

La présente invention concerne, d'une manière générale, un procédé d'incorporation d'additifs, et en particulier de pigments et/ou colorants, dans des couches minces et l'application de ce procédé à l'incorporation d'additifs dans des verres ophtalmiques, en particulier pour la coloration de ces verres ophtalmiques.

Les verres ophtalmiques en matériaux organiques sont le plus souvent teintés dans la masse, par trempage dans des bains aqueux de coloration, chauffés à des température de l'ordre de 90°C et dans lesquels les pigments sont dispersés. Les pigments diffusent alors sous la surface du substrat et la densité de couleurs est obtenue avec une quantité de pigments ayant pénétré dans la masse du substrat.

Ces opérations de coloration sont délicates puisqu'elles dépendent de l'affinité entre le pigment et le matériau constituant le substrat.

Les verres ophtalmiques étant constitués de nombreux substrats de natures différentes, il convient d'adapter en permanence le traitement pour chacun de ceux-ci, ce qui est coûteux en temps et en personnel consacré à cette tâche. Celle-ci est rendue encore plus difficile lorsqu'il s'agit d'obtenir des couleurs nécessitant la pénétration de plusieurs pigments et de nombreuses retouches, effectuées après appréciation visuelle d'opérateurs, sont alors nécessaires.

Il est classique de munir les verres ophtalmiques d'un revêtement anti-abrasion. Il est connu d'incorporer divers additifs (pigments, absorbeurs UV) dans les compositions de revêtement anti-abrasion avant application et durcissement de ceux-ci sur une face du verre ophtalmique. Néanmoins, l'incorporation d'additifs, en particulier de pigments, affecte les propriétés du revêtement anti-abrasion.

On connaît également des revêtements teintables après durcissement, en utilisant un procédé de coloration par trempage identique à celui mentionné pour la coloration des substrats de base. Les problèmes qui se posent sont alors les mêmes que pour les substrats de base, en raison de la multiplicité des revêtements, en particulier anti-abrasion, utilisés dans le domaine de l'optique ophtalmique.

US41146, 658 divulgue un procédé pour conferer une résistance élevée à la dégrandation par la luminère ultraviolette à des articles en polycarbonate.

Il était donc souhaitable de disposer d'un procédé rapide, reproductible et applicable à tout type de substrat, quel que soit le matériau le constituant.

En outre, un tel procédé devrait permettre d'obtenir l'ensemble des gammes de coloration, de la teinte la plus claire (teinte A) à la plus foncée (teinte C).

L'invention a donc pour objet de résoudre l'ensemble de ces problèmes.

Les buts ci-dessus sont atteints, selon l'invention, grâce à un nouveau procédé permettant d'incorporer au moins un additif dans une couche mince formée sur un substrat et comportant les étapes suivantes :
(a) la formation sur au moins une face du substrat d'une couche mince imprégnable ;
(b) le dépôt par revêtement centrifuge (spin coating) sur ladite couche mince imprégnable d'une composition d'imprégnation comprenant au moins un additif incorporé dans un milieu diluant approprié ;
(c) la diffusion de la composition d'imprégnation au sein de ladite couche mince et ;
(d) le traitement du substrat revêtu de la couche mince imprégnée pour en éliminer, au moins partiellement, le milieu diluant.

Le procédé selon l'invention est prévu spécialement pour la réalisation de verres ophtalmiques mais pourrait trouver d'autres applications avantageuses.

Par « couche mince imprégnable » selon l'invention, on entend une couche d'épaisseur généralement inférieure à 5 µm et constituée d'un matériau permettant la pénétration en son sein, par diffusion, du ou des additif(s) contenu(s) dans la composition d'imprégnation.

De préférence, la couche mince imprégnable a une épaisseur de 0.5 à 2 µm, typiquement de l'ordre de 1µm.

La couche mince imprégnable selon l'invention peut être constituée par tout matériau permettant d'incorporer en son sein, par diffusion, le ou les additif(s) à incorporer.

De préférence, le matériau des couches minces imprégnables selon l'invention est un matériau optiquement transparent.

Le matériau de la couche mince imprégnable selon l'invention est généralement un matériau polymère et de préférence obtenu à partir d'un latex.

Comme cela est bien connu, les latex sont des dispersions de polymères dans une phase aqueuse.

On peut utiliser dans le procédé de l'invention, tout type de latex, tels que les latex poly(méth)acryliques, les latex poly(méth)acryliques-styrène et les latex de polyuréthanne.

Les latex préférés sont les latex de polyuréthanne tels que ceux décrits dans le brevet européen EP-0.680.492.

La couche mince imprégnable selon l'invention peut être formée par tout procédé classique connu. En particulier, la formation de la couche mince imprégnable peut être réalisée par dépôt d'une solution et/ou dispersion du matériau imprégnable sur une ou plusieurs face(s) du substrat et séchage de cette solution et/ou dispersion pour former la couche mince imprégnable.

Le dépôt de la solution et/ou dispersion du matériau imprégnable peut se faire par exemple par trempage du substrat dans la solution et/ou dispersion, ou de préférence, par dépôt de la solution et/ou dispersion par revêtement centrifuge (spin coating).

Le séchage, pour obtenir la couche mince selon l'invention, peut se faire à température ambiante ou par chauffage, par exemple en étuve ou infrarouge.

Le substrat peut être tout substrat sur lequel il est possible de faire adhérer une couche mince selon l'invention. En particulier, le substrat peut être en un matériau optiquement transparent tel qu'un verre organique ou un verre minéral.

Par substrat, au sens de la présente invention, il faut entendre un substrat nu ou un substrat déjà revêtu, telle qu'une lentille ophtalmique éventuellement déjà revêtue. Préférentiellement, la couche mince selon l'invention est appliquée sur un substrat nu.

La composition d'imprégnation selon l'invention est une composition qui contient au moins un additif à incorporer dans un milieu diluant approprié.

Parmi les additifs à incorporer, on peut citer les colorants, les pigments, les plastifiants, les absorbeurs UV et les composés photochromiques. Les additifs préférés sont les colorants, les pigments et les composés photochromiques.

La composition d'imprégnation peut être une solution et/ou une dispersion de l'additif à incorporer.

De préférence, le milieu diluant est un solvant, au moins partiel, du ou des additif(s) à incorporer. Mieux, le milieu diluant est un solvant du ou des additif(s) à incorporer et la composition d'imprégnation est une solution.

Eventuellement, le solvant de la composition d'imprégnation peut être un solvant de gonflement du matériau de la couche mince, pour ainsi faciliter la diffusion du ou des additif(s) au sein de la couche mince.

De préférence encore, la composition d'imprégnation est une solution et/ou une dispersion d'un ou plusieurs colorant(s), pigment(s) ou composé(s) photochromique(s).

Comme indiqué précédemment, la composition d'imprégnation est déposée par revêtement centrifuge sur la couche mince imprégnable, ce qui permet d'obtenir un film de composition d'imprégnation équiépais, et en particulier dans le cas de solutions de coloration, une coloration homogène de la couche mince imprégnable.

Le film de composition d'imprégnation est alors absorbé par la couche mince imprégnable.

Après imprégnation de la couche mince par la composition d'imprégnation, le substrat revêtu de la couche mince imprégnée est séché, par exemple par chauffage à l'étuve ou infrarouge.

La composition d'imprégnation contient de préférence un agent de rétention de l'additif, c'est-à-dire un composé qui aura pour effet d'empêcher la rétrodiffusion de l'additif vers l'extérieur, en particulier vers des couches éventuelles qui pourraient être formées sur la couche mince imprégnable, telles que des couches anti-abrasion dans le cas d'une application aux verres ophtalmiques.

Dans le cas d'une couche mince imprégnable, en un matériau polymère réticulable, l'agent de rétention est de préférence un agent de réticulation ou d'accroissement de la réticulation du matériau polymère.

Ainsi, dans le cas d'une couche mince imprégnable en latex de polyuréthanne, la composition d'imprégnation peut comprendre un agent de réticulation qui est un hydrolysat d'époxyalcoxysilane, de préférence un époxytrialcoxysilane, et en particulier le γ-glycidoxypropyltrimethoxysilane (GLYMO). Ces hydrolysats d'époxyalcoxysilane sont connus dans la technique et sont décrits entre autres dans le brevet FR 2.702.486.

La concentration en agent de réticulation dans la composition d'imprégnation est généralement inférieure à 25% en poids, de préférence inférieure à 20% et, mieux encore, inférieure à 10 % en poids.

La composition d'imprégnation, lorsqu'elle contient un agent de réticulation, peut également comprendre un agent de durcissement. Dans le cas d'une composition d'imprégnation contenant un hydrolysat d'époxyalcoxysilane comme agent de réticulation, l'agent de durcissement est de préférence un chélate d'aluminium, et tout particulièrement l'acétylacétonate d'aluminium.

L'emploi d'un agent réticulant et éventuellement d'un agent de durcissement dans les compositions d'imprégnation, lorsque la couche mince est un matériau polymère réticulable, a pour avantage de rendre la couche mince résistante à l'attaque de solvants et d'empêcher la rétrodiffusion de l'additif vers l'extérieur.

Cela est important, en particulier lorsqu'on effectue le dépôt d'une couche ultérieure telle qu'une couche de revêtement anti-abrasion. En effet, la composition pour le revêtement anti-abrasion comprend généralement un - solvant organique qui peut, lors de son dépôt, diffuser dans la couche mince et en extraire l'additif si la couche mince par exemple en latex ne comporte pas de réticulant.

On peut utiliser, dans le cadre de la présente invention, tout revêtement anti-abrasion classiquement utilisé, en particulier dans le domaine de l'optique ophtalmique. Les revêtements anti-abrasion préférés sont des revêtements anti-abrasion à base d'hydrolysat de silane, en particulier d'hydrolysat d'époxy silane tel que décrit dans le brevet français FR 2.702.486 et le brevet US 4.211.823.

Bien évidemment, on peut également déposer successivement sur la couche mince selon l'invention d'autres revêtements classiques dans le domaine de l'optique ophtalmique, tels que des revêtements anti-chocs et anti-réfléchissants.

D'autres caractéristiques avantageuses de l'invention apparaîtront dans la description qui va suivre d'un mode de mise en oeuvre de l'invention décrit à titre de simple exemple non limitatif, en se référant aux dessins annexés qui illustrent schématiquement les principales étapes du procédé.

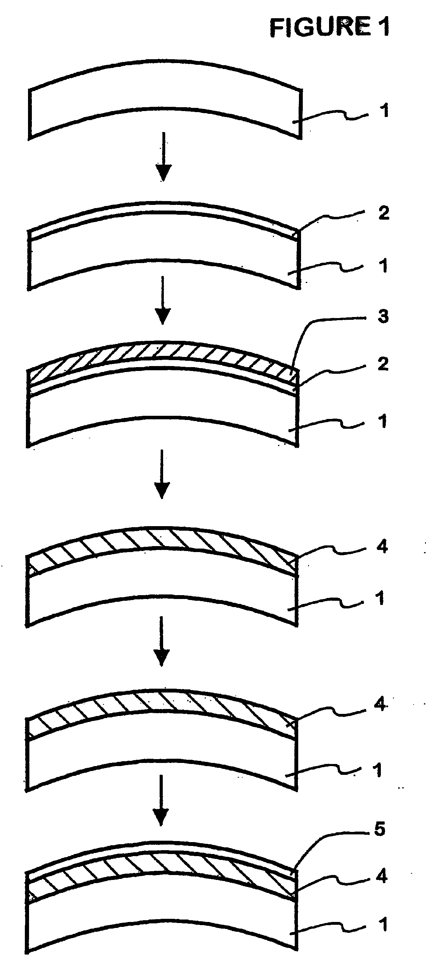

La figure unique montre en particulier l'application du procédé selon l'invention à la coloration d'une lentille ophtalmique, par exemple en polycarbonate, ou en poly(diéthylène glycol bisallyl carbonate).

La première étape du procédé consiste à déposer, par exemple par revêtement centrifuge ou par trempage sur une face de la lentille 1 une couche d'un latex, par exemple un latex de polyuréthanne, puis à sécher cette couche de latex de polyuréthanne, par exemple à température ambiante, pour obtenir la couche mince imprégnable 2, d'épaisseur par exemple 1 micromètre.

Une couche d'une solution de colorant 3 est alors déposée sur la couche mince imprégnable 2, par revêtement centrifuge.

Le dépôt par centrifugation de la solution de colorant permet d'obtenir un dépôt d'épaisseur sensiblement uniforme et par suite une coloration homogène de la couche mince imprégnable.

La solution de colorant déposée est alors diffusée dans la couche mince imprégnable, de façon à obtenir une couche mince colorée 4 puis séchée à l'étuve, par exemple pendant 15 minutes à 100°C. Un chauffage par infrarouge est également possible.

Eventuellement, on peut alors procéder au dépôt d'un revêtement anti-abrasion 5 sur la couche mince colorée ; ce dépôt peut être effectué de manière classique par centrifugation ou éventuellement par trempage.

Les exemples suivants illustrent la présente invention. Dans les exemples, sauf indication contraire, toutes les parties et tous les pourcentages sont exprimés en poids.

### EXEMPLES 1 à 7 :

Des lentilles Orma^{®} plan de la société ESSILOR (poly(diéthylèneglycolbis(allylcarbonate))), ont été colorées en utilisant le procédé de l'invention. Pour chaque solution de colorant, on a utilisé 5 lentilles par essai.

### 1. Dépôt de la couche mince imprégnable :

Dans tous les cas, la couche mince imprégnable est formée en déposant par revêtement centrifuge sur une face des lentilles un primaire de polyuréthanne (W234 de la société Baxenden dilué à 55% dans l'eau).

On a déposé 2 ml de latex du centre au bord de la lentille en rotation (vitesse de rotation : 500 tours par minute) en 5 secondes. Puis, la vitesse de rotation de la lentille a été augmentée jusqu'à 1500 tours par minute, de manière à uniformiser l'épaisseur de la couche de latex et on a maintenu cette rotation pendant 10 secondes. Après arrêt de la rotation, la couche mince imprégnable à 60°C est séchée pendant 15 minutes dans une étuve.

### 2. Préparation des solutions colorantes :

4 ou 5 grammes de colorants ont été dissous dans 100 grammes de solvants en ajoutant éventuellement à cette solution un hydrolysat de γ-glycidoxypropyltriméthoxysilane (Glymo) réalisé en mélangeant 100 grammes de Glymo avec 22,9 grammes de HCl.

0,1N et éventuellement de l'acétylacétonate d'aluminium (Al(acac)₃) comme agent de durcissement.

Les solutions colorantes obtenues sont filtrées sur filtre plissé, puis sont déposées sur les couches minces imprégnables.

Les compositions des solutions colorantes sont données dans le tableau I ci-dessous :

**TABLEAU I**

| | Solutions de colorant (g) | | | | | | |
|---|---|---|---|---|---|---|---|
| | 1 | 2 | 3 | 4 | 5 | 6 | 7 |
| Colorant | | | | | | | |
| - Bleu Orasol GN | 3,6 | 3,6 | - | - | - | - | - |
| - Bleu Savinyl RS | - | - | 3,6 | 3,6 | 4,5 | 4,5 | 4,5 |
| Solvant | | | | | | | |
| - Acétone | 86,4 | 86,4 | 86,4 | 86,4 | 85,5 | 85,5 | 85,5 |
| Agent réticulant | | | | | | | |
| - Glymo hydrolysé | - | 10 | - | 10 | - | 10 | 10 |
| Agent de durcissement | | | | | | | |
| - Al(acac)₃ | - | 3,26 | - | 3,26 | - | 3,26 | - |

### 3. Dépôt des solutions colorantes :

On a déposé 2 ml de chacune des solutions colorantes par revêtement centrifuge sur la couche mince d'imprégnation, en allant du centre au bord de la lentille. Ce dépôt initial s'effectue en 5 secondes avec une vitesse de rotation de 500 tours par minute. Ensuite, la vitesse de rotation est augmentée jusqu'à 1500 tours/minute et la lentille est maintenue en rotation à cette vitesse pendant 20 secondes pour uniformiser l'épaisseur du dépôt et évaporer les solvants. Une fois le dépôt terminé, des lentilles ont été mises à l'étuve à 100°C pendant 1 heure, puis ressorties et laissées refroidir à température ambiante pendant environ 30 minutes.

### 4. Dépôt du vernis anti-rayures :

Après refroidissement, on a déposé sur les couches minces colorées, par revêtement centrifuge (la vitesse lors du dépôt étant de 500 tours par minute), 2 ml d'un vernis polysiloxane classique, de façon à protéger le substrat et la couche mince colorée.

Les lentilles étaient maintenues à cette vitesse de rotation de 500 tours par minute pendant 10 secondes, puis la vitesse était accélérée jusqu'à 1500 tours/minute pendant 10 secondes, de façon à uniformiser l'épaisseur du dépôt.

Une fois les dépôts terminés, les lentilles sont portées à l'étuve pendant 3 heures à 100°C, de façon à polymériser le vernis anti-rayures.

Facultativement, les opérations ci-dessus peuvent être exécutées sur la deuxième face des lentilles selon l'intensité de coloration que l'on veut obtenir.

Le vernis anti-rayures utilisé dans les exemples a été préparé en faisant tomber gouttes à gouttes 80,5 parties d'acide chlorhydrique 0,1 N dans une solution contenant 224 parties de Glymo et 120 parties de diméthyldiéthoxysilane.

La solution hydrolysée est agitée 24 heures à température ambiante, puis on ajoute 718 parties de silice colloïdale à 30% dans le méthanol, 15 parties d'acétylacétonate d'aluminium et 44 parties d'éthylcellosolve.

On ajoute une petite quantité d'agents tensio-actif.

On a mesuré la transmission optique (Tv) des lentilles colorées obtenues avant et après vernissage avec le vernis anti-rayures.

Les mesures du taux de transmission Tv sont faites avec un appareil Hazegard de la société Garner, sous illuminant C, selon la norme ANSI Z 80-3-1996.

Ils peuvent aussi être réalisés avec un spectrocolorimètre classique et, dans ce cas, la norme est la norme ISO 8980, partie 3.

A titre comparatif, le taux de transmission pour un verre ORMA^{®} revêtu du revêtement ci-dessus, en l'absence de tout autre traitement, est de 92,2%

Pour chaque solution colorante, la valeur de transmission indiquée est la valeur moyenne pour 5 lentilles.

Les résultats sont donnés dans le tableau II ci-après :

**TABLEAU II**

| Ex. n° | Solution | Tv avant vernissage | Tv après vernissage | △ |
|---|---|---|---|---|
| 1 | 1 | 64,18 | 88,06 | 23,88 |
| 2 | 2 | 61,52 | 63,6 | 1,8 |
| 3 | 3 | 45,94 | 67,78 | 21,84 |
| 4 | 4 | 47,18 | 47,18 | 0 |
| 5 | 5 | 34, 32 | 53,46 | 19,14 |
| 6 | 6 | 36,1 | 35,24 | 0,14 |
| 7 | 7 | 33,26 | 42,66 | 9,4 |

Les résultats montrent qu'on obtient des lentilles ayant une coloration intense. En outre, on voit que l'emploi d'un agent de réticulation et éventuellement d'un agent de durcissement dans la solution du colorant, permet une rétention exceptionnelle de la coloration de la couche mince colorée, même lorsqu'on applique sur celle-ci un vernis anti-rayures.

Le procédé d'incorporation d'additifs selon l'invention présente de nombreux avantages.

Ce procédé d'incorporation d'additifs est tout d'abord indépendant de la nature du substrat, puisque la coloration est effectuée dans une couche mince déposée sur le substrat. Il est ainsi possible de traiter tout substrat organique en particulier des substrats de polycarbonate, très sensibles à l'attaque des solvants, mais également des substrats en verre minéral.

Le procédé est reproductible et la coloration facile à doser, puisqu'elle dépend de paramètres définis à l'avance tels que l'épaisseur de la couche mince imprégnable, la concentration en additifs dans la solution d'imprégnation.

Le procédé d'incorporation d'additifs selon l'invention, en particulier de colorants, est plus rapide que les techniques de l'art antérieur.

Le procédé de l'invention est prévu, en particulier pour la coloration de verres opthalmiques et permet d'atteindre des colorations plus denses que les procédés de l'art antérieur.

Bien entendu l'invention ne se limite pas aux détails du procédé qui vient d'être décrit à titre de simple exemple et qui pourrait, en particulier, comporter d'autres étapes ou faire l'objet de variantes, sans s'écarter du cadre de protection défini par les revendications.

D'autre part, l'invention s'applique spécialement à la réalisation de verres ophtalmiques mais elle pourrait avoir d'autres applications, chaque fois qu'il est intéressant de recouvrir un substrat d'une couche mince dans laquelle est incorporé un additif.

## Revendications

1. Procédé d'incorporation d'au moins un additif dans une couche mince formée sur un substrat, comportant les étapes suivantes :
(a) la formation sur au moins une face d'un substrat d'une couche mince imprégnable ;
(b) le dépôt par revêtement centrifuge sur ladite couche mince imprégnable d'une composition d'imprégnation comprenant au moins un additif incorporé dans un milieu diluant approprié ;
(c) la diffusion de la composition d'imprégnation au sein de ladite couche mince imprégnable et ;
(d) le traitement du substrat revêtu de la couche mince imprégnée pour éliminer, au moins partiellement, le milieu diluant de la couche mince imprégnée.

2. Procédé selon la revendication 1, **caractérisé en ce que** le traitement de l'étape (d) est un traitement thermique.

3. Procédé selon la revendication 1 ou 2, **caractérisé en ce que** la formation de ladite couche mince comprend un dépôt sur au moins ladite face du substrat d'un matériau précurseur par trempage ou revêtement centrifuge.

4. Procédé selon l'une quelconque des revendications 1 à 3, **caractérisé en ce que** le matériau précurseur de ladite couche mince est une composition polymère.

5. Procédé selon la revendication 4, **caractérisé en ce que** la composition de polymère est un latex.

6. Procédé selon la revendication 5, **caractérisé en ce que** le latex est un latex de polyuréthanne.

7. Procédé selon l'une quelconque des revendications 4 à 6, **caractérisé en ce que** la composition d'imprégnation comprend en outre un agent de rétention de l'additif, de préférence un agent de réticulation de la composition de polymères.

8. Procédé selon la revendication 7, **caractérisé en ce que** l'agent de réticulation est un hydrolysat d'époxyalcokysilane, de préférence d'époxytrialcoxysilane.

9. Procédé selon la revendication 8, **caractérisé en ce que** l'époxytrialcoxysilane est le γ-glycidoxypropyltriméthoxysilane.

10. Procédé selon l'une quelconque des revendications 7 à 9, **caractérisé en ce que** la composition d'imprégnation comprend en outre un agent de durcissement.

11. Procédé selon la revendication 10, **caractérisé en ce que** l'agent de durcissement est un chélate d'aluminium, de préférence l'acétylacétonate d'aluminium.

12. Procédé selon l'une quelconque des revendications précédentes, **caractérisé en ce que** le substrat est un verre minéral ou un verre organique.

13. Procédé selon la revendication 12, **caractérisé en ce que** le verre organique est un verre en polycarbonate.

14. Procédé selon l'une quelconque des revendications précédentes, **caractérisé en ce que** le ou les additifs sont choisis parmi les pigments, les absorbeurs UV, les colorants, les composés photochromiques et les plastifiants, de préférence parmi les pigments, les colorants et les compositions photochromiques.

15. Procédé selon l'une quelconque des revendications précédentes, **caractérisé en ce que** le substrat est un substrat nu ou déjà revêtu.

16. Procédé selon l'une quelconque des revendications précédentes, **caractérisé en ce que** le substrat est un verre ophtalmique.

17. Procédé selon l'une quelconque des revendications précédentes, **caractérisé en ce qu'**il comprend en outre le dépôt sur la couche mince imprégnée d'un revêtement anti-abrasion.

18. Procédé selon la revendication 17, **caractérisé en ce que** le dépôt du revêtement anti-abrasion se fait par trempage ou par revêtement centrifuge.

19. Application du procédé selon l'une des revendications 1 à 18 à la coloration de verres ophtalmiques.

## Claims

1. Method for incorporating at least one additive into a thin film formed on a substrate, comprising the following steps :
(a) forming an impregnatable thin film on at least one face of a substrate ;
(b) depositing an impregnation composition comprising at least one additive incorporated in an appropriate diluent medium on said impregnatable thin film by spin coating ;
(c) diffusing the impregnation composition within said impregnatable thin film and ;
(d) treating the substrate coated with the impregnated thin film to at least partially remove the diluent medium from the impregnated thin film.

2. Method according to claim 1, **characterized in that** the treatment of step (d) is a thermal treatment.

3. Method according to claim 1 or 2, **characterized in that** the formation of said thin film comprises the deposit on at least said face of the substrate of a precursor material by dipping or spin coating.

4. Method according to any one of claims 1 to 3, **characterized in that** the precursor material of said thin film is a polymer composition.

5. Method according to claim 4, **characterized in that** the polymer composition is a latex.

6. Method according to claim 5, **characterized in that** the latex is a polyurethane latex.

7. Method according to any one of claims 4 to 6, **characterized in that** the impregnation composition also comprises an agent for retaining the additive, preferably an agent for crosslinking the polymer composition.

8. Method according to claim 7, **characterized in that** the crosslinking agent is an epoxyalkoxysilane hydrolysate, preferably a n e poxytrialkoxysilane hydrolysate.

9. Method according to claim 8, **characterized in that** the epoxytrialkoxysilane is γ-glycidoxypropyltrimethoxysilane.

10. Method according to any of claims 7 to 9, **characterized in that** the impregnation composition also contains a hardening agent.

11. Method according to claim 10, **characterized in that** the hardening agent is an aluminium chelate, preferably aluminium acetylacetonate.

12. Method according to any one of the preceding claims, **characterized in that** the substrate is an inorganic glass or an organic glass.

13. Method according to claim 12, **characterized in that** the organic glass is a polycarbonate glass.

14. Method according to any one of the preceding claims, **characterized in that** the additive or additives are selected from pigments, UV absorbers, dyes, photochromic compounds and plastifiers, preferably from pigments, dyes and photochromic compounds.

15. Method according to any one of the preceding claims, **characterized in that** the substrate is uncoated or already coated.

16. Method according to any one of the preceding claims, **characterized in that** the substrate is an ophthalmic glass.

17. Method according to any one of the preceding claims, **characterized in that** it also comprises depositing an anti-abrasion coating on the impregnated thin film.

18. Method according to claim 17, **characterized in that** the deposit of the anti-abrasion coating is performed by dipping or by spin coating.

19. Application of the method according to any one of claims 1 to 18 to the coloration of ophthalmic glasses.

## Patentansprüche

1. Verfahren zum Einmischen von mindestens einem Zusatzstoff in eine auf einem Substrat gebildete dünne Schicht, umfassend die folgenden Schritte:
(a) Bildung einer imprägnierbaren dünnen Schicht auf mindestens einer Seite eines Substrats;
(b) Abscheiden einer Imprägnierungszusammensetzung, umfassend mindestens einen in ein geeignetes Verdünnungsmittel eingemischten Zusatzstoff, auf dieser imprägnierbaren dünnen Schicht mittels Schleuderbeschichten;
(c) Diffusion der Imprägnierungszusammensetzung in diese imprägnierbare dünne Schicht hinein; und
(d) Behandlung des mit der imprägnierten dünnen Schicht beschichteten Substrats, um, zumindest teilweise, das Verdünnungsmittel von der imprägnierten dünnen Schicht zu entfernen.

2. Verfahren nach Anspruch 1, **dadurch gekennzeichnet, dass** die Behandlung von Schritt (d) eine thermische Behandlung ist.

3. Verfahren nach Anspruch 1 oder 2, **dadurch gekennzeichnet, dass** die Bildung dieser dünnen Schicht ein Abscheiden eines Vorläufermaterials auf dieser mindestens einen Seite des Substrats mittels Eintauchen oder Schleuderbeschichten umfasst

4. Verfahren nach einem der Ansprüche 1 bis 3, **dadurch gekennzeichnet, dass** das Vorläufermaterial dieser dünnen Schicht eine Polymerzusammensetzung ist.

5. Verfahren nach Anspruch 4, **dadurch gekennzeichnet, dass** die Polymerzusammensetzung ein Latex ist.

6. Verfahren nach Anspruch 5, **dadurch gekennzeichnet, dass** der Latex ein Polyurethanlatex ist.

7. Verfahren nach einem der Ansprüche 4 bis 6, **dadurch gekennzeichnet, dass** die Imprägnierungszusammensetzung des Weiteren ein Rückhaltemittel für den Zusatzstoff, vorzugsweise ein Vernetzungsmittel der Polymerzusammensetzung umfasst.

8. Verfahren nach Anspruch 7, **dadurch gekennzeichnet, dass** das Vernetzungsmittel ein Epoxyalkoxysilanhydrolysat, vorzugsweise ein Epoxytrialkoxysilanhydrolysat ist.

9. Verfahren nach Anspruch 8, **dadurch gekennzeichnet, dass** das Epoxytrialkoxysilan γ-Glycidoxypropyltrimethoxysilan ist.

10. Verfahren nach einem der Ansprüche 7 bis 9, **dadurch gekennzeichnet, dass** die Imprägnierungszusammensetzung des Weiteren ein Härtungsmittel umfasst.

11. Verfahren nach Anspruch 10, **dadurch gekennzeichnet, dass** das Härtungsmittel ein Aluminiumchelat und vorzugsweise ein Aluminiumacetylacetonat ist.

12. Verfahren nach einem der vorhergehenden Ansprüche, **dadurch gekennzeichnet, dass** das Substrat ein mineralisches Glas oder ein organisches Glas ist.

13. Verfahren nach Anspruch 12, **dadurch gekennzeichnet, dass** das organische Glas ein Glas aus Polycarbonat ist.

14. Verfahren nach einem der vorhergehenden Ansprüche, **dadurch gekennzeichnet, dass** der oder die Zusatzstoffe aus den Pigmenten, den UV-Absorptionsmitteln, den Farbstoffen, den photochromen Verbindungen und den Weichmachern, vorzugsweise aus den Pigmenten, den Farbstoffen und den photochromen Zusammensetzungen ausgewählt werden.

15. Verfahren nach einem der vorhergehenden Ansprüche, **dadurch gekennzeichnet, dass** das Substrat ein nacktes Substrat oder bereits beschichtet ist.

16. Verfahren nach einem der vorhergehenden Ansprüche, **dadurch gekennzeichnet, dass** das Substrat ein ophthalmisches Glas ist.

17. Verfahren nach einem der vorhergehenden Ansprüche, **dadurch gekennzeichnet, dass** es des Weiteren die Abscheidung einer antiabrasiven Beschichtung auf der imprägnierten dünnen Schicht umfasst.

18. Verfahren nach Anspruch 17, **dadurch gekennzeichnet, dass** die Abscheidung der antiabrasiven Beschichtung mittels Eintauchen oder Schleuderbeschichten erfolgt.

19. Anwendung des Verfahrens nach einem der Ansprüche 1 bis 18 auf die Färbung von ophthalmischen Gläsern.
